# EUROPEAN PATENT APPLICATION

(11) **EP 4 847 769 A1**
(43) Date of publication of application: **02.12.2026**
(21) Application number: 25216456.1
(22) Date of filing: 17.11.2025
(51) Int. Cl.: F03D 80/00, H04N 7/18, H04N 23/61, H04N 23/695, H04N 23/90

(54) **DEVICE AND METHOD FOR MONITORING MOVING OBJECT IN WIND FIELD, AND STORAGE MEDIUM**

(30) Priority: 29.05.2025 CN 202510712811
(71) Applicant: Envision Energy Technology Pte Ltd., 079903 Singapore (SG)
(72) Inventor: LIU, Yang, Singapore (SG); XIE, Hongliang, Singapore (SG); FENG, Chao, Singapore (SG); ZHAO, Zilin, Singapore (SG); FANG, Ya, Singapore (SG); JIN, Lei, Singapore (SG)
(74) Representative: Balder IP Law, S.L.

(57) **Abstract**

The present disclosure relates to the technical field of remote detection of a moving object, and provides a device and a method for monitoring a moving object in a wind field, and a storage medium. The device for monitoring the moving object in the wind field according to the present disclosure includes: a tower, configured to mount a first support and a second support at a predetermined distance above the ground; first cameras, configured to identify the moving object in the wind field; the second support, configured to rotate relative to the first support and rotate based on the identified moving object, such that the moving object is kept in measurement ranges of a second camera and a rangefinder; and the second camera, configured to capture the moving object and control the second support to rotate in real time, thereby achieving synchronization between a monitoring area and a position of the moving object. The rangefinder is configured to determine a distance from the moving object. Thus, the position of the moving object can be accurately monitored, and a wind turbine can be controlled to start and stop at appropriate time, thereby reducing the number and durations of shutdowns of the wind turbine and increasing power generation of the wind turbine. Moreover, monitoring blind sections caused by occlusion can be prevented.

## Description

### TECHNICAL FIELD

The present disclosure relates to the technical field of remote moving object detection, and particularly relates to a device and a method for monitoring a moving object in a wind field, and a storage medium.

### BACKGROUND

Wind turbines convert wind energy into mechanical energy and then into electrical energy, providing renewable energy for the power grid. The site where wind turbines are located is referred to as a wind field. Since wind fields are typically located in open suburban areas, they are prone to interference from moving object in the wilderness, which can affect the safe operation of wind turbines. If the moving object is a living creature, it may also cause harm to the creature.

To avoid the aforementioned safety issues, devices for monitoring moving object or devices for driving away living creatures are typically installed on wind turbines. However, due to the obstruction of the wind turbine, the monitoring device's effectiveness in monitoring moving object in blind areas is poor, leading to the deterrent device's inefficiency in driving away living creatures. If, to avoid interference from moving object, the wind turbine is stopped or the deterrent device is activated during fixed time periods prone to moving object, so as to result in reduced power generation from the wind turbine and increased unnecessary electrical waste for the deterrent device.

### SUMMARY

The embodiments of the present disclosure are intended to provide a device and a method for monitoring a moving object in a wind field, and a storage medium. By installing the monitoring device in the wind field rather than on the wind turbines, blind spots caused by wind turbine obstruction are avoided. A first cameras with a larger field of view is configured to monitor moving object over a wide area. Once the presence of a moving object in the wind field is confirmed, a second camera with a smaller field of view and a range finder are activated to determine the image and distance to the moving object. This allows for more accurate monitoring of the moving object, precise control of wind turbine startup and shutdown, and reduced power generation losses.

According to embodiments of the present disclosure, a monitoring device for monitoring a moving object in a wind field is provided. The monitoring device includes a first cameras, a second camera, a rangefinder, a first support for supporting the first cameras, a second support for supporting the second camera and the range finder, and a tower. The first cameras have a first field of view, the second camera has a second field of view, and the first field of view is larger than the second field of view. The tower is configured to mount the first support and the second support at a predetermined distance above the ground. The first cameras are configured to capture first images and identify a moving object in the first images. The second support is configured to rotate relative to the first support and based on the moving object in the first images, such that the moving object is kept in a measuring range of the second camera and the range finder. The second camera is configured to capture second images of the moving object, and the second support is configured to rotate in real time based on the second images. The rotation of the second support is synchronized with the movement of the moving object. The rangefinder is configured to determine the distance between the moving object and the monitoring device.

According to embodiments of the present disclosure, a method for monitoring a moving object in a wind field is provided. The method is applied to the device for monitoring a moving object in a wind field. The method includes: determining, in response to the first cameras identifying a moving object, a first azimuth angle based on pixel coordinates of the moving object in the first images identified by the first cameras, where the rotation of the second support is controlled based on the first azimuth angle until the moving object is within the second field of view of the second camera; capturing, by the second camera, second images of the moving object, where the second support is rotated in real time based on the second images of the moving object, the rotation of the second support is synchronized with the movement of the moving object, and a distance between the moving object and the monitoring device is continuously detected by the rangefinder; determining, based on the positional information of the rangefinder and the distance to the moving object, coordinate information of the moving object in the wind field; and assessing, based on the coordinate information of the moving object in the wind field, whether there is a collision risk between the moving object and a wind turbine in the wind field

According to embodiments of the present disclosure, a computer-readable storage medium is further provided, configured to store computer programs, which implement the above-mentioned method for monitoring a moving object in a wind field when executed by a processor.

Compared with the related art, the embodiments of the present disclosure set up the first cameras, the second camera and the rangefinder at a position above the ground at a predetermined distance through a tower, thereby avoiding the monitoring blind spot caused by the obstruction of vegetation and wind turbines on the ground. The first cameras are configured to identify the moving object in the wind field. The second support supporting the second camera and the rangefinder is controlled to rotate relative to the first support according to the identified moving object. And the second images of the moving object are captured by the second camera. The second support rotates in real time based on the second images, and the angle of rotation is synchronized with the movement of the moving object, thereby realizing real-time tracking of the moving object, and then the real-time image of the moving object can be captured by the second camera, and the real-time distance to the moving object can be determined by the rangefinder. The GIS (Geographic Information System) coordinate information of the moving object may be determined by combining the real-time image of the moving object and real-time distance to the moving object with the positional information of the monitoring device, thereby realizing precise control of the startup and shutdown of the wind turbine and reducing power generation loss.

In addition, a plurality of first cameras are provided. The adjacent first cameras have partially overlapped first fields of view.

In addition, the shooting angle of at least one of the plurality of first cameras is an elevation angle, and the moving object identified by at least one of the plurality of first cameras is a moving object in the airspace.

In addition, the second camera is a zoom lens, the optical axis of the rangefinder is aligned with the optical axis of the zoom lens, and the ranging angle of the rangefinder is dynamically adjusted according to the zoom parameter of the zoom lens.

In addition, the device for monitoring a moving object in a wind field also includes: a first calculating module connected to the first cameras, and a second calculating module connected to the second camera; where the first calculating module is configured to determine a first azimuth angle according to the pixel coordinates of the moving object in the first images; the first azimuth angle is configured to control the rotation of the second carrier; the second calculating module is configured to determine a second azimuth angle according to the pixel coordinates of the moving object in the second images; and the second azimuth angle is configured to control the rotation of the second support.

In addition, the device for monitoring a moving object in a wind field further including: a server; where the server is configured to receive the second azimuth angle sent by the second calculating module and the distance sent by the rangefinder.

In addition, the second calculating module is further configured to identify whether the moving object in the second images is a target object, and the server is configured to receive a type of the target object sent by the second calculating module. Alternatively, the server is configured to determine whether the moving object is a target object based on the received second images.

In addition, the method including, in response to the moving object being identified by the first cameras: acquiring, by the first cameras, monitoring images within a range of 360 degrees; denoising the monitoring image; and identifying, by using a moving object detection algorithm, the moving object in the denoised monitoring images.

In addition, the method including: determining, a non-monitoring area within a first field of view range of the first cameras, where the non-monitoring area is an area predetermined to have a fixed object; and identifying, in response to the moving object in the first images being identified, the areas other than the non-monitoring area.

In addition, the method further including, in response to the first cameras identifying a moving object: identifying, based on the second images captured by the second camera, whether the moving object is a target object, where if it is a non-target object, shielding the non-target object in the first images captured by the first cameras within a predetermined time.

In addition, the method including, in response to determining that there is a risk of collision between the moving object and a wind turbine in the wind field: controlling, in response to the distance between the moving object and the wind turbine being less than a first predetermined threshold and greater than a second predetermined threshold, the wind turbine to operate at a low speed, where the first predetermined threshold is greater than the second predetermined threshold; and controlling, in response to the distance between the moving object and the wind turbine is less than or equal to the second predetermined threshold, the wind turbine to stop,

In addition, the method further including, in response to determining that there is a risk of collision between the moving object and a wind turbine in the wind field: driving away, in response to the distance between the moving object and the wind turbine being less than a third predetermined threshold and greater than a second predetermined threshold, the moving object by a deterrence module, where the third predetermined threshold is less than the first predetermined threshold, and the third predetermined threshold is greater than the second predetermined threshold.

In addition, according to the method, in response to a plurality of first cameras being provided, the operation of controlling the rotation of the second support based on the first azimuth angle including: determining, the first azimuth angle obtained by each first cameras; deduplicating, based on the time at which each first cameras obtains the first azimuth angle and the magnitude of the first azimuth angle, the first azimuth angles obtained by the plurality of first cameras; and controlling, based on the first azimuth angle after deduplication, the rotation of the second support.

In addition, the method further including, in response to the first cameras identifying that there are a plurality of moving objects: determining, based on the magnitude of the moving object, the moving speed of the moving object and the time at which the moving object appears, the priority of the plurality of identified moving objects. And the operation of controlling the rotation of the second support based on the first azimuth angle includes controlling the second support to rotate according to the first azimuth angle of the moving object with a higher priority, based on the priority of the plurality of moving objects.

In addition, the type of the moving object is determined based on the second images captured by the second camera. The method for determining the type of the moving object includes: identifying image features using a deep learning algorithm, and determining the type of the moving object based on the image features; or, when the moving object is a flying object, determining the type of the moving object based on the overall magnitude or wingspan of the flying object in the second images.

### BRIEF DESCRIPTION OF THE DRAWINGS

One or more embodiments are exemplarily illustrated through figures in the corresponding drawings, and these exemplary illustrations do not limit the embodiments unless specifically stated; the figures in the drawings do not constitute proportional limitations.
FIG. 1 is a schematic diagram of a device for monitoring a moving object in a wind field according to an embodiment of the present disclosure;
FIG. 2 is a schematic diagram of a device for monitoring a moving object in a wind field according to another embodiment of the present disclosure;
FIG. 3 is a flowchart of a method for monitoring a moving object in a wind field according to some embodiments of the present disclosure; and
FIG. 4 is an overall flowchart of a method for monitoring a moving object in a wind field according to some embodiments of the present disclosure.

### DETAILED DESCRIPTION OF THE EMBODIMENTS

To make the objectives, technical solutions, and advantages of the embodiments of the present disclosure clearer, the following will provide a detailed explanation of each embodiment of the present disclosure in conjunction with the accompanying drawings. However, those skilled in the art should understand that many technical details have been presented in the various embodiments of the present disclosure to help readers better understand this application. Nevertheless, even without these technical details and various changes and modifications based on the following embodiments, the technical solutions claimed in this application can still be realized.

The division of the following embodiments is for the sake of description and should not constitute any limitation on the specific implementation of the present disclosure. The various embodiments can be combined and referenced with each other as long as they do not contradict.

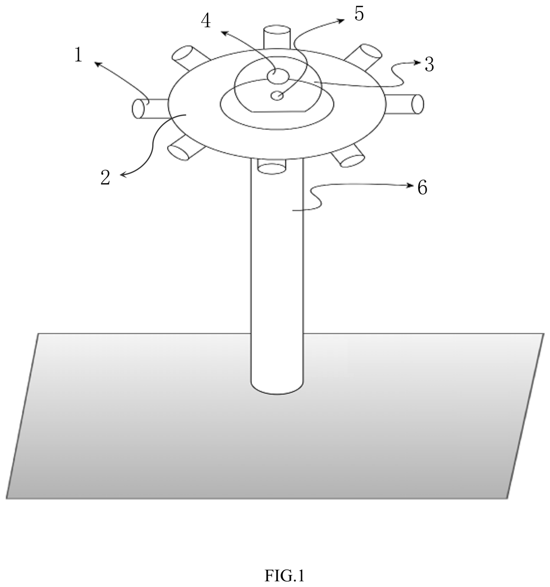

Embodiments of the present disclosure relate to a device for monitoring a moving object in a wind field. As shown in FIG.1, the device includes: first cameras 1, a second camera 4, a rangefinder 5, a first support 2 configured to support the first cameras 1 , a second support 3 configured to support the second camera 4 and the rangefinder 5, and a tower 6. A first field of view of the first cameras 1 is larger than a second field of view of the second camera 4. The tower 6 is configured to mount the first support 2 and the second support 3 at a predetermined distance above the ground. The first cameras 1 are configured to capture first images and identify a moving object in the first images. The second support 3 is configured to rotate relative to the first support 2 and based on the moving object in the first images, such that the moving object is kept in measurement ranges of the second camera 4 and the rangefinder 5. The second camera 4 is configured to capture second images of the moving object, and the second support 3 is further configured to rotates in real time based on the second images, where the rotation of the second supporting part 3 is synchronized with the movement of the moving object. And the rangefinder 5 is configured to determine a distance between the moving object and the monitoring device.

The first cameras 1 may be wide-field-of-view cameras. A plurality of first cameras 1 are arranged around the second camera 4-specifically, spaced apart around the second camera 4 in a 360-degree direction. Adjacently arranged first cameras 1 have partially overlapping first fields of view. The shooting angle of at least one of the plurality of first cameras 1 is an elevation angle. And at least one of the plurality of first cameras 1 is configured to identify the moving object in the airspace. The combination of the plurality of first cameras enables 360-degree horizontal blind-spot-free monitoring of the upper-hemisphere airspace.

The first cameras 1 may be installed at the edge of the first support 2 to expand the monitoring range of all first cameras. The first support 2 may be a circular platform, and the second support 3 is located in the central area of the first support 2. The second support 3 includes a movable base and a motor. The motor is configured to control the movable base to rotate with three degrees of freedom (pitching, rotating, and tilting), thereby enabling the second support 3 to rotate relative to the first support 2.

The resolution of the second camera 4 may be higher than that of the first cameras 1. Specifically, the second camera 4 may be a high-resolution zoom camera, which can capture high-definition images of moving object by changing zoom parameters, facilitating the determination of the type of moving object based on these high-definition images. The rangefinder 5 may be a laser rangefinder. Compared with optical vision rangefinders, using a laser rangefinder can simplify calibration operations, reduce maintenance difficulty and costs, while improving the accuracy of distance detection. The optical axis of the rangefinder is aligned with that of zoom lens in the second camera 4, and the ranging angle of the rangefinder is dynamically adjusted according to the zoom parameters of the zoom lens. This ensures that the ranging range matches the field of view of the zoom lens, avoiding excessively large or small ranging ranges and improving ranging efficiency.

The aforementioned first cameras, second camera, and rangefinder may all be connected to independent calculating units to quickly process the information they each collect, thereby improving information processing efficiency. Specifically, the device for monitoring moving an object in a wind field may include: a first calculating module connected to the first cameras, and a second calculating module connected to the second camera. The first calculating module is configured to determine a first azimuth angle according to the pixel coordinates of the moving object in the first images, and the first azimuth angle is configured to control the rotation of the second support. The second calculating module is configured to determine a second azimuth angle according to the pixel coordinates of the moving object in the second images, and the second azimuth angle is configured to control the rotation of the second support. Herein, the first azimuth angle is configured to control the rotation of the second support, ensuring that the moving object is kept in the monitoring range of the second camera. Once the second camera may capture the moving object, the rotation of the second support can be adjusted according to the second azimuth angle to enable the second camera to track the moving object in real time.

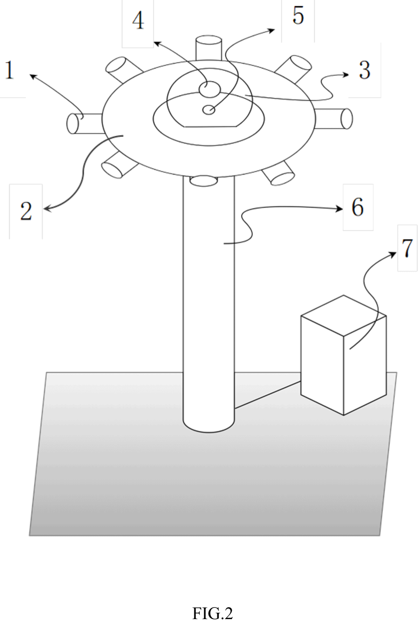

In the embodiments of the present disclosure, as shown in FIG. 2, the device for monitoring the moving object in the wind field further includes: a server 7, configured to receive the second azimuth angle sent by the second calculating module and the distance sent by the rangefinder. The server 7 stores and backs up the information monitored by the monitoring device, and may also determine whether there is a collision risk between the moving object and the wind turbines in the wind field based on the monitored second azimuth angle and distance to the moving object. If there is a collision risk, the server 7 may send a shutdown command to the corresponding wind turbine. Alternatively, the server may also send the monitored second azimuth angle and distance to the moving object to a control equipment of the wind field, and the control equipment may determine whether there is a collision risk and control the start and stop of the wind turbines.

In addition to the second azimuth angle and distance to the moving object, the information received by the server may also include the type of the moving object and images of the moving object. Acquiring multi-dimensional information can enrich the formulation of wind turbine start-stop strategies. Specifically, the second calculating module identifies whether the moving object in the second images is a target object. If it is a target object, it determines the type of the target object and crops the target object from the second images. The server is further configured to receive the type of the target object and the cropped second images sent by the second calculating module. The target objects here may be rare birds, protected animals, etc. Identifying such moving object allows for focused protection of special creatures. Further, the server may also independently identify the type of moving object based on the received second images to determine whether the moving object in the second images is a target object.

Furthermore, the device for monitoring a moving object in the wind field further includes a deterrent module. The deterrent module may be a laser emitting unit, an ultrasonic emitting unit, or a high-decibel horn, etc. The deterrent module is configured to, when it is detected that a moving object may collide with a wind turbine, drive away the moving object, ensuring the safety of the moving object and preventing damage to the wind turbine.

Compared with the related art, in the embodiments of the present disclosure, the first cameras, the second camera and the rangefinder are disposed at a position above the ground at a predetermined distance through a tower, to avoid the monitoring blind spot caused by the obstruction of vegetation and wind turbines on the ground. The first cameras are configured to identify the moving object in the wind field. The second support supporting the second camera and the rangefinder is controlled to rotate relative to the first support according to the identified moving object. And the second images of the moving object are captured by the second camera. The second support rotates in real time based on the second images, and the angle of rotation is synchronized with the movement of the moving object, thereby realizing real-time tracking of the moving object, and then the real-time image of the moving object can be captured by the second camera, and the real-time distance to the moving object can be determined by the rangefinder. The GIS (Geographic Information System) coordinate information of the moving object may be determined by combining the real-time image and real-time distance to the moving object with the positional information of the monitoring device, thereby realizing precise control of the startup and shutdown of the wind turbine and reducing power generation loss.

Low-resolution first cameras are configured to perform preliminary screening of moving object. Once the presence of a moving object in the wind field is confirmed, the high-resolution second camera and rangefinder are activated to capture images of the moving object and determine the distance to the moving object, so as to improve the accuracy of calculating the moving object's coordinate information and reduce power consumption by the high-resolution camera.

Given that the wind field covers a large area, a single device for monitoring a moving object may not easily monitor the entire site. Therefore, a plurality of devices for monitoring a moving object may be deployed at different locations in the wind field. The information monitored by each device is aggregated to control equipment of the wind field for analysis, enabling control of the wind turbines in the wind field. For example, install one device for monitoring a moving object each in the first and second areas of the wind field. When a moving object passes through the first area, the corresponding monitoring device tracks and monitors it. When the moving object passes through the second area, the corresponding monitoring device there takes over the tracking. This prevents monitoring blind spots in the wind field.

The moving object-related information that each monitoring device aggregate to the control equipment of the wind field may include: the type of moving object, relative distance from the moving object to the monitoring device and azimuth from the monitoring device, and moving speed of the moving object. The control equipment of the wind field is further configured to upon receiving these information, determine, based on the moving object's type, whether the moving object is a rare species or a protected creature. The control equipment is further configured to, in cases where rare or protected objects are at risk of colliding with wind turbines, trigger the implementation of appropriate protective measures. Additionally, the control equipment is further configured to calculate the moving object's GIS coordinates in the wind field and determine its movement trajectory, using the object's relative distance, azimuth, and moving speed. The control equipment is further configured to send signals for implementing protective measures to wind turbines along this trajectory, control those wind turbines at collision risk to shut down, and send start-up signals once the moving object has moved away from the shutdown turbines, thereby controlling the turbines' operation and minimizing downtime duration. The analytical operations described above that are performed in the control equipment of the wind field can also be implemented through calculations in the server of each monitoring device. Each monitoring device directly sends to the control equipment conclusions such as whether the type of moving object is a rare species or a protected object, as well as the GIS coordinate information of the moving object in the wind field, thereby reducing the computational load of the control equipment of the wind field.

Embodiments of the present disclosure also relate to a method for monitoring a moving object in a wind field, applied to the aforementioned device for monitoring a moving object in a wind field. The method includes: determining, in response to the first cameras identifying a moving object, a first azimuth angle based on the pixel coordinates of the moving object in the first image identified by the first cameras, and causing the second support to rotate based on the first azimuth angle until the moving object is in the second field of view of the second camera; causing the second camera to capture second images of the moving object, causing the second support to rotate in real time based on the second images of the moving object, the rotation of the second support being synchronized with the movement of the moving object, and causing the rangefinder to continuously detect a distance between the moving object and the monitoring device; determining, based on the positional information of the rangefinder and the distance to the moving object, coordinate information of the moving object in the wind field; and assessing, based on the coordinate information of the moving object in the wind field, whether there is a collision risk between the moving object and a wind turbine in the wind field. Through accurate monitoring of a moving object, wind turbines can be controlled to start and stop at appropriate times, reducing the number and duration of wind turbine shutdowns and increasing the power generation of wind turbines. The following is a detailed description of the implementation details of the method for monitoring a moving object in a wind field in this embodiment. The following content is only provided for ease of understanding and is not necessary for implementing the solution.

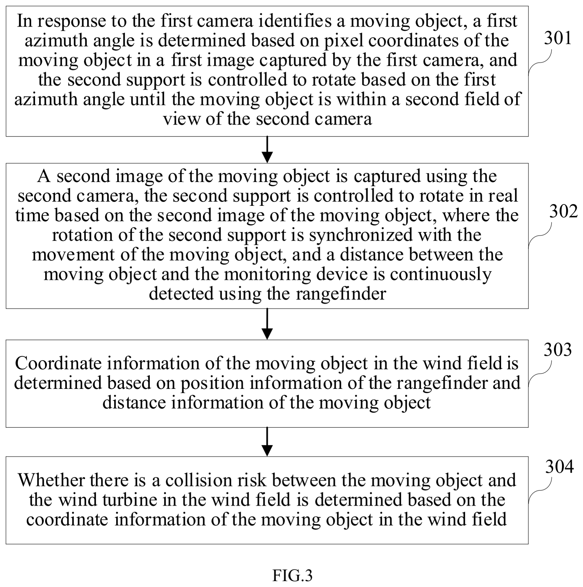

The method for monitoring a moving object in a wind field in this embodiment is shown in FIG. 3.

At 301, in response to the first cameras identifying a moving object, a first azimuth angle is determined based on pixel coordinates of the moving object in first images captured by the first cameras, and the second support is controlled to rotate based on the first azimuth angle until the moving object is in a second field of view of the second camera.

Specifically, the first cameras are configured to collect monitoring images within a 360-degree range, denoising processing is performed on the monitoring images, and a moving target detection algorithm is configured to identify a moving object in the denoised monitoring images. In practical applications, denoising processing and the moving target detection algorithm can be implemented simultaneously. That is, by setting a minimum analysis area threshold (i.e., X*X pixels), analysis of objects smaller than X*X pixels is ignored, directly filtering out small-magnitude noise targets.

When the first cameras identify a moving object, the pixel coordinates of the moving object in the first field of view of the first cameras are recorded. A mapping relationship between the pixel coordinates in the first field of view of the first cameras and the azimuth angle of the second support is established in advance through calibration. Subsequently, the first azimuth angle can be determined according to the pixel coordinates of the moving object in the first images of the first cameras based on this mapping relationship, and the azimuth angle of the second support is adjusted based on the first azimuth angle. This is to control the second support to be synchronized with the movement of the moving object in real time, ensuring that the second camera and rangefinder on the second support can capture the moving object. The second support changes its azimuth angle through motor control, and the control of the azimuth angle can adopt a closed-loop control method to achieve rapid convergence to the target azimuth angle.

At 302, second images of the moving object is captured using the second camera, the second support is controlled to rotate in real time based on the second images of the moving object, where the rotation of the second support is synchronized with the movement of the moving object, and a distance between the moving object and the monitoring device is continuously detected using the rangefinder.

Specifically, the second camera is a high-resolution camera, which can collect high-definition images of the moving object, and then the type of the moving object can be determined according to the high-definition images.

The method for determining the type of the moving object includes: identifying image features through a deep learning algorithm, and determining the type of the moving object according to the image features. Specifically, a deep learning model may be constructed, and the constructed deep learning model is trained using a large number of images of a moving object. The trained deep learning model may classify the images to be identified according to image features, and then output whether there is a moving object in the identified second images and determine the type of the moving object.

Alternatively, when the moving object is a flying object, the type of the moving object may further be determined according to the overall magnitude or wingspan magnitude of the flying object in the second images. Specifically, key points of the moving object in the second images are determined using a target detection algorithm (YOLO), such as the wingtips, beaks, and tails of flying objects. By analyzing the posture of the flying object in the second images, the second images are converted into a planar image parallel to the direction of the flying object's wingspan. Then, based on the positions of the aforementioned determined key points, the overall magnitude or wingspan of the flying object is determined, and is then matched against the standard overall magnitudes or standard wingspans of different types of flying objects recorded in the database to further determine the type of the flying object.

Since the position of the moving object changes in real time, when the moving object moves, it is necessary to adjust the shooting range of the second camera accordingly, keeping the moving object in the central area of the second field of view of the second camera at all times, so as to largely prevent the moving object from moving out of the shooting range. Additionally, the monitoring range of the rangefinder for the moving object is limited, so the measurement range of the rangefinder can be aligned with the central area of the second field of view of the second camera-meaning the distance to the moving object measured by the rangefinder is most accurate when the moving object is in the central area of the second field of view. In practice, the measurement range of the rangefinder may also be matched with any area of the second field of view of the second camera, as long as it is ensure that the moving object is in the corresponding measurement range of the rangefinder during monitoring. The second azimuth angle is determined according to the pixel coordinates of the moving object in the second field of view of the second camera, and the rotation of the second support is continuously controlled based on this second azimuth angle to achieve continuous tracking of the moving object.

At 303, coordinate information of the moving object in the wind field is determined based on positional information of the rangefinder and distance information of the moving object.

Specifically, the rangefinder is a laser rangefinder. The optical axis of the rangefinder is aligned with that of the zoom lens of the second camera, and the ranging angle of the rangefinder is dynamically adjusted according to the zoom parameters of the zoom lens, so as to ensure that the ranging range matches the field of view of the zoom lens, thereby preventing the ranging range from being excessively large or small and improving ranging efficiency.

At 304, whether there is a collision risk between the moving object and the wind turbine in the wind field is determined based on the coordinate information of the moving object in the wind field.

Specifically, when the distance between the moving object and the wind turbine is less than a first predetermined threshold but greater than a second predetermined threshold, the wind turbine is controlled to operate at a low speed, where the first predetermined threshold is larger than the second predetermined threshold. When the distance between the moving object and the wind turbine is less than a third predetermined threshold but greater than the second predetermined threshold, the deterrent module is activated to drive away the moving object, where the third predetermined threshold is smaller than the first predetermined threshold and larger than the second predetermined threshold. When the distance between the moving object and the wind turbine is less than or equal to the second predetermined threshold, the wind turbine is controlled to shut down. After the moving object moves away from the shut-down wind turbine, the wind turbine is controlled to resume operation.

To further ensure the accuracy of monitoring results, a non-monitoring area within the first field of view of the first cameras can also be defined. The non-monitoring area refers to a pre-determined area with fixed objects-such as areas with vegetation and trees in the wind field. These fixed objects in the wind field can not affect the operation of the wind turbine, however, when identifying the first images captured by the first cameras, the system may still determine that there might be a moving object in the non-monitoring area, which in turn occupies computing resources. To reduce the occupation of computing resources, when identifying a moving object in the first images, only the areas other than the non-monitoring area need to be identified. Specifically, the non-monitoring area in the first images may be masked (i.e., the non-monitoring area is set to have the same pixel value, typically zero). When the moving target detection algorithm is configured to identify the first images, the non-monitoring area can not be recognized as a moving object, thus achieving an anti-interference effect.

In addition, other anti-interference methods may also be adopted: when the first cameras identify a moving object, the second images captured by the second camera is used to determine whether the moving object is a target object. If it is a non-target object, the non-target object in the first images captured by the first cameras may be shielded in a predetermined time period. The target object here refers to those confirmed to affect the operation of wind turbines, such as rare species and protected objects. Similarly, the captured second images may also be configured to identify whether a moving object is a non-target object. Non-target objects may be set as clouds, the sun, airplanes, and other objects that do not collide with wind turbines. When an object that does not affect wind turbine operation is identified, since the non-target object remains within the monitoring range of the first cameras for a certain period, the non-target object in the first images may be shielded. This avoids repeated calculations of useless information, which would otherwise impact calculation results. The shielding method may involve masking the non-target object in the first images (i.e., using a mask). A shielding duration is usually set for the shielding of non-target objects in the first images. This prevents missed detection of a new moving object entering the monitoring range due to prolonged shielding. The specific method for identifying whether a moving object is a target object mentioned above can adopt the method for determining the type of moving object described earlier-i.e., determining whether the moving object is a target object through a deep learning method or by the overall magnitude or wingspan of the flying object.

When there are a plurality of first cameras, there may be cases where all of them detect a moving object. However, the second support can only monitor one azimuth angle; therefore, it is necessary to consider the priority of the plurality of detected moving objects, and the second support prioritizes adjusting based on the azimuth angle of the moving object with higher priority. Specifically, the priority of the plurality of detected moving objects may be determined based on the magnitude of the moving objects, their moving speed, and their time of appearance. Moving objects with larger magnitude, faster moving speed, and earlier occurring time have higher priority.

In addition, since the first fields of view of the plurality of first cameras have overlapping areas, there may be cases where two first cameras identify the same moving object. In such cases, both first cameras that identify the same moving object may send the first azimuth angle to the second support. At this point, the second support needs to perform deduplication processing on all first azimuth angles obtained from the first cameras, based on the magnitude of the first azimuth angles sent by different first cameras and their sending times. It then controls rotation of the second support according to the first azimuth angle after deduplication processing.

The deduplication processing and priority determination of the aforementioned first azimuth angles can be implemented independently or in conjunction with each other. For example, priority determination may be performed on the first azimuth angles after deduplication processing, or deduplication processing may be performed on the first azimuth angles after priority ranking, followed by controlling the rotation of the second support based on the first azimuth angles. This ensures that urgent moving objects are prioritized for identification, while avoiding repeated identification of the same moving object and improving identification efficiency.

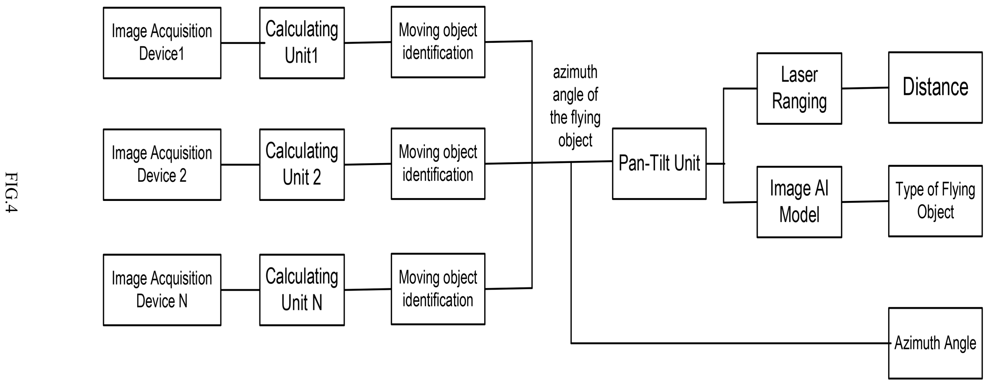

The following is an overall description of the method for monitoring a moving object in a wind field according to the present disclosure with reference to FIG. 4.

A single device for monitoring a moving object in a wind field includes a number of image acquisition devices (image acquisition device 1, image acquisition device 2, image acquisition device N). The image acquisition devices may be first cameras or low-power-consuming acquisition units with image recognition functionality. Each image acquisition device is correspondingly connected to a calculating unit (image acquisition device 1 is correspondingly connected to calculating unit 1, image acquisition device 2 to calculating unit 2, and image acquisition device N to calculating unit N). The calculating units perform moving object identification on the images captured by the connected image acquisition devices. When the calculating unit corresponding to any image acquisition device identifies a moving object, it determines the azimuth angle (first azimuth angle) of the moving object relative to the pan-tilt unit (second support) based on the moving object, and controls the pan-tilt unit to rotate toward the position of the moving object (flying object) based on this first azimuth angle. When a single image acquisition device identifies a moving object, the pan-tilt unit rotates based on the first azimuth angle of the moving object identified by that image acquisition device. When a plurality of image acquisition devices simultaneously identify a moving object, the plurality of image acquisition devices send the first azimuth angles of the identified moving object to the pan-tilt unit. The pan-tilt unit then performs deduplication processing based on the magnitude of the first azimuth angles and the identification time, conducts priority ranking on the plurality of first azimuth angles after deduplication, and tracks them in sequence according to their urgency. If a single image acquisition device identifies a plurality of moving objects, the image acquisition device may perform priority ranking on the identified plurality of moving objects, then send the priority levels and first azimuth angles of the moving objects to the pan-tilt unit, which then tracks the moving objects in sequence based on their priority levels. The first images captured by the image acquisition devices need not be a reproduction of the real scene; they may selectively shield images in the real scene that are irrelevant to the monitoring results, such as vegetation and trees in the wind field, as well as clouds, the sun, etc., passing through the sky.

When the second support rotates, the second camera and laser rangefinder on the pan-tilt unit start operating. The second camera captures second images and continuously controls the rotation of the second support to track the moving object based on the second azimuth angle of the moving object in the second images. Meanwhile, the second camera enlarges the captured second images to identify the type of the moving object. If the type of the moving object matches the monitored types (i.e., it is determined that the moving object affects the start-up or shutdown of the wind turbines), the second camera continues to monitor the moving object until the moving object flies away from the monitoring range of the monitoring device. If the moving object does not affect the start-up or shutdown of the wind turbines, tracking of the moving object is abandoned. The second support rotates according to other first azimuth angles sent by the first cameras, so that another moving object falls within the monitoring range of the second camera, and the aforementioned monitoring process of the second camera is repeated. The laser rangefinder on the pan-tilt unit measures the distance between the moving object and the rangefinder, and the calculating unit of the second camera on the pan-tilt unit uses an image AI model to determine the type of the moving object (flying object). Finally, the calculated distance, type, and azimuth angle of the moving object are sent to the server, so that the server can analyze whether there is a collision risk between the wind turbines and the moving object based on the relevant information of the moving object, and implement anti-collision protective measures.

The first cameras may remain in operation for an extended period. To further save power, the first cameras may be put in sleep mode during time periods when, based on experience, moving objects are few or even non-existent.

In addition, when the movement trajectory of a small-magnitude non-rare protected object overlaps with the position of a wind turbine, consideration can be given to operating the wind turbine normally or at low speed. For example, when small insects are identified as approaching a wind turbine, their impact on the wind turbine is almost negligible. To avoid frequent start-ups and shutdowns of the wind turbine, its operating state can be maintained.

The division of operations in the various methods above is only for the clarity of description. During implementation, operations can be merged into a single operation or some operations can be split into multiple operations. As long as they contain the same logical relationships, they all fall within the protection scope of the present disclosure. Any insignificant modifications added to the algorithm or process, or insignificant designs introduced without changing the core design of the algorithm and process, also fall within the protection scope of the present disclosure.

The method in this embodiment is implemented based on the devices and system in aforementioned embodiments. Therefore, the features and implementation effects mentioned in the devices and system in aforementioned embodiments are equally applicable in this embodiment.

Embodiments of the present disclosure also relate to a device for monitoring a moving object in a wind field, including: a control module configured to, when first cameras identify a moving object, determine a first azimuth angle according to the pixel coordinates of the moving object in the first images identified by the first cameras, and control the rotation of the second support based on the first azimuth angle until the moving object is within the second field of view of the second camera; an acquisition module configured to use activate the second camera to collect second images of the moving object, with the second support rotating in real time based on the second images of the moving object, and the rotation of the second support being synchronized with the movement of the moving object; a distance module configured to activate the rangefinder to continuously detect the distance between the moving object and the monitoring device, and determine the coordinate information of the moving object in the wind field based on the positional information of the rangefinder and the distance to the moving object; and a assessing module configured to assess whether there is a collision risk between the moving object and the wind turbines in the wind field based on the coordinate information of the moving object in the wind field.

In addition, a denoising module is configured to use the first cameras to collect monitoring images within a 360-degree range, and perform denoising processing on the monitoring images. And the control module is further configured to use a moving target detection algorithm to identify a moving object in the denoised monitoring images.

In addition, the control module is further configured to determine a non-monitoring area within the first field of view of the first cameras, where the non-monitoring area is a predetermined area with fixed objects. And when identifying a moving object in the first images, the control module identifies areas other than the non-monitoring area.

In addition, the control module is further configured to identify whether the moving object is a target object based on the second images captured by the second camera. If it is a non-target object, the control module shields the non-target object in the first images captured by the first cameras within a predetermined time period.

In addition, the assessing module is further configured to control the wind turbine to operate at a low speed when the distance between the moving object and the wind turbine is less than the first predetermined threshold and greater than the second predetermined threshold, where the first predetermined threshold is greater than the second predetermined threshold. And the assessing module controls the wind turbine to shut down when the distance between the moving object and the wind turbine is less than or equal to the second predetermined threshold.

In addition, the assessing module is further configured to drive away the moving object using the deterrent module when the distance between the moving object and the wind turbine is less than the third predetermined threshold but greater than the second predetermined threshold, where the third predetermined threshold is less than the first predetermined threshold and greater than the second predetermined threshold.

In addition, when there are a plurality of first cameras, the control module is configured to determine the first azimuth angle obtained by each first camera, perform deduplication processing on all first azimuth angles obtained by the plurality of first cameras according to the time when each first camera obtains the first azimuth angle and the magnitude of the first azimuth angle, and control the rotation of the second support based on the first azimuth angles after deduplication processing.

In addition, when the first cameras identify a plurality of moving objects, the control module is further configured to: determine the priority of the identified plurality of moving objects according to the magnitude of the moving objects, their moving speed, and their time of appearance; and the operation of controlling the rotation of the second support based on the first azimuth angle includes: controlling the second support to rotate according to the first azimuth angle of the moving object with higher priority, based on the priority of the plurality of moving objects.

In addition, the acquisition module is further configured to determine the type of the moving object based on the second images captured by the second camera. The methods for determining the type of the moving object include: identifying image features using a deep learning algorithm and determining the type of the moving object based on the image features; or, when the moving object is a flying object, determining the type of the moving object according to the overall magnitude or wingspan of the flying object in the second images.

It is worth noting that all modules involved in this embodiment are logical modules. In practical applications, a logical unit may be a physical unit, a part of a physical unit, or implemented by a combination of a plurality of physical units. Furthermore, to highlight the innovative part of the present disclosure, units that are not closely related to solving the technical problem proposed by the present disclosure are not included in this embodiment. However, this does not mean that other units do not exist in this embodiment.

This embodiment can be implemented in conjunction with the aforementioned method embodiments. The relevant technical details mentioned in the method embodiments remain valid in this embodiment, and are not repeated here to avoid redundancy. Correspondingly, the relevant technical details mentioned in this embodiment can also be applied to the method in aforementioned embodiments.

Embodiments of the present disclosure relate to an electronic device, including: at least one processor; and a memory communicatively connected to the at least one processor. The memory is configured to store instructions executable by the at least one processor, and the instructions, when executed by the at least one processor, causing the at least one processor to implement the aforementioned method for monitoring a moving object in a wind field.

Among them, the memory and the processor are connected by a bus, which may include any number of interconnected buses and bridges, and the bus connects various circuits of one or more processors and the memory together. The bus may also connect together various other circuits such as peripherals, voltage regulators, and power management circuits, which are well known in the art and, therefore, will not be further described herein. The bus interface provides an interface between the bus and the transceiver. The transceiver may be one element or multiple elements, such as multiple receivers and transmitters, providing means for communicating with various other devices over a transmission medium. Data processed by the processor is transmitted over a wireless medium via an antenna. Further, the antenna also receives data and transmits the data to the processor.

The processor is responsible for managing the bus and general processing, and may also provide various functions including timing, peripheral interface, voltage regulation, power management, and other control functions. The memory may be configured to store data used by the processor when performing operations.

Embodiments of the present disclosure relates to a computer-readable storage medium storing a computer program. The computer program, when executed by a processor causes the processor to implement the method of above-described embodiments.

That is, it should be understood by those skilled in the art that all or part of the operations in the method of the above-described embodiments may be implemented by instructing related hardware through a program stored in a storage medium and including several instructions for causing a device (which may be a single chip microcomputer, a chip, etc.) or a processor to implement all or part of the operations in the method of each embodiment of the present invention. The storage medium includes various media capable of storing program codes, such as a USB disk, a removable hard disk, a Read-Only Memory (ROM), a Random Access Memory (RAM), a magnetic disk, or an optical disk.

It should be understood by those skilled in the art that the above-described embodiments are specific embodiments for supporting out the disclosure, and that various changes in form and detail may be made thereto in practical application without departing from the scope of the disclosure.

## Claims

1. A device for monitoring a moving object in a wind field, comprising:
first cameras (1) having a first field of view;
a second camera (4) having a second field of view;
a rangefinder (5);
a first support (2) configured to support the first cameras (1);
a second support (3) configured to support the second camera (4) and the rangefinder (5) and
a tower (6);
wherein,
the first field of view is larger than the second field of view;
the tower (6) is configured to mount the first support (2) and the second support (3) at a position at a predetermined distance above the ground;
the first cameras (1) are configured to capture first images and identify the moving object in the first images;
the second support (3) is configured to rotate relative to the first support (2) and based on the moving object in the first images, thereby keeping the moving object in measurement ranges of the second camera (4) and the rangefinder (5);
the second camera (4) is configured to capture second images of the moving object, and the second support (3) is further configured to rotate in real time based on the second images, wherein the rotation of the second support (3) is synchronized with the movement of the moving object; and
the rangefinder (5) is configured to determine a distance between the moving object relative to the device.

2. The device according to claim 1, wherein a plurality of first cameras (1) are provided; and the first field of view of a respective first camera of the plurality of first cameras (1) partially overlaps the first field of view of a camera adjacent to the respective camera in the plurality of first cameras (1).

3. The device according to claim 2, wherein at least one of the plurality of first cameras (1) has an upward shooting angle, and at least one of the plurality of first cameras (1) is configured to identify a moving object located in the airspace.

4. The device according to claim 1, wherein the second camera (4) has a zoom lens, an optical axis of the rangefinder (5) is aligned with an optical axis of the zoom lens, and a ranging angle of the rangefinder (5) is dynamically adjusted according to zoom parameters of the zoom lens.

5. The device according to claim 1, further comprising:
a first calculating module configured to connect to the first cameras (1), and
a second calculating module configured to connect to the second camera (4);
wherein the first calculating module is configured to determine a first azimuth angle according to pixel coordinates of the moving object in the first images, and the first azimuth angle is configured to control the rotation of the second support (3);
wherein the second calculating module is configured to determine a second azimuth angle according to pixel coordinates of the moving object in the second images, and the second azimuth angle is configured to control the rotation of the second support (3).

6. The device according to claim 5, further comprising:
a server (7);
wherein the server (7) is configured to receive the second azimuth angle sent by the second calculating module and the distance sent by the rangefinder (5).

7. The device according to claim 6, wherein,
the second calculating module is further configured to identify whether the moving object in the second images is a target object;
the server (7) is further configured to receive a type of the target object sent by the second calculating module; or
the server (7) is further configured to determine whether the moving object is the target object based on the second images received.

8. A method for monitoring a moving object in a wind field, applied to the device for monitoring the moving object in the wind field according to any one of claims 1 to 7, and comprising:
determining, in response to the first cameras identifying a moving object, a first azimuth angle based on pixel coordinates of the moving object in the first images identified by the first cameras (1), wherein a rotation of the second support (3) is controlled until the moving object is within the second field of view of the second camera (4) based on the first azimuth angle;
capturing, by the second camera (4), second images of the moving object, wherein the second support (3) is rotated in real time based on the second images of the moving object, where the rotation of the second support (3) is synchronized with the movement of the moving object, and a distance between the moving object and the monitoring device is continuously detected using the rangefinder (5);
determining, based on positional information of the rangefinder (5) and the distance to the moving object, coordinate information of the moving object in the wind field; and
assessing, based on the coordinate information of the moving object in the wind field, whether there is a collision risk between the moving object and a wind turbine in the wind field.

9. The method according to claim 8, further comprising:
determining, a non-monitoring area within the first field of view of the first cameras (1), wherein the non-monitoring area is a predetermined area containing fixed objects; and
identifying, in response to the moving object being identified in the first images, areas other than the non-monitoring area.

10. The method according to claim 8, further comprising, in response to the first cameras (1) identifying the moving object:
identifying, based on the second images captured by the second camera (4), whether the moving object is a target object; and
masking, in response to the moving object being identified as a non-target object, the non-target object in the first images captured by the first cameras (1) for a predetermined period of time.

11. The method according to claim 8, further comprising, in response to assessing that there is a collision risk between the moving object and the wind turbine in the wind field:
controlling, in response to the distance between the moving object and the wind turbine being less than a first predetermined threshold and greater than a second predetermined threshold, the wind turbine to operate at a low rotational speed, wherein the first predetermined threshold is greater than the second predetermined threshold; and
controlling, in response to the distance between the moving object and the wind turbine being less than or equal to the second predetermined threshold, the wind turbine to shut down.

12. The method according to claim 8, in response to the plurality of first cameras (1) being provided, operation of controlling rotation of the second support (3) based on the first azimuth angle comprising:
determining the first azimuth angle captured by each first camera (1);
performing, based on the time at which each first azimuth angle is obtained by each first camera (1) and magnitude of each first azimuth angle, deduplication processing on all first azimuth angles obtained by the plurality of first cameras (1); and
controlling, based on the first azimuth angle after the deduplication processing, the rotation of the second support (3).

13. The method according to claim 8, further comprising, in response to the first cameras (1) identifying a plurality of moving objects:
determining, based on magnitude of the moving object, moving speed of the moving object, and time at which the moving object appears, the priority of the plurality of identified moving objects; and
wherein controlling rotation of the second support (3) based on the first azimuth angle comprises:
controlling the second support (3) to rotate according to the first azimuth angle of the moving object with higher priority, based on the priority of the plurality of moving objects.

14. A computer-readable storage medium, configured to store computer programs, which, when executed by a processor, causes the processor to implement the method for monitoring the moving object in the wind field according to any one of claims 8 to 13.
